# EUROPÄISCHE PATENTANMELDUNG

(11) **EP 1 150 238 A1**
(43) Veröffentlichungstag der Anmeldung: **31.10.2001**
(21) Anmeldenummer: 00108905.1
(22) Anmeldetag: 27.04.2000
(51) Int. Cl.: G06K 7/00, G07B 15/02

(54) **Verfahren zum Kollisionsmanagement für ein drahtloses Erfassungssystem**

(71) Anmelder: HÄNI PROLECTRON AG, CH-9552 Bronschhofen/Wil (CH)
(72) Erfinder: Gilg, Dietrich, 8047 Zürich (CH); Schreppers, Reto, 8953 Dietikon (CH); Brändli, Willi, 8962 Bergdietikon (CH); Vultier, Yvo, 8048 Zürich (CH)
(74) Vertreter: Zedlitz, Peter, Dipl.-Inf.

(57) **Zusammenfassung**

Das Verfahren zum Kollisionsmanagement ist für ein drahtloses Erfassungssystem vorgesehen, das eine Mehrzahl von tragbaren Empfängern (T, T_{X}, T1, T2) und wenigstens eine auf einem Fahrzeug angebrachte Sende-/Empfangseinheit (AP) aufweist. Die Kommunikation ist mittels eines Ein-/Ausschaltzyklus (t_{CYCL}, t_{PSG}) intermittierend. Ausgesandte Aufrufmeldungen (AP_BC) werden zunächst durch eine Quittungsmeldung (QD_ACK) von einem der Erfassungszone zugeordneten Quittierungsgerät (QD) bestätigt. Die Empfänger T, Tₓ) antworten auf eine empfangene Aufrufmeldung (AP_BC) mit einer den betreffenden Empfänger (T_{X}) identifizierenden Präsenzmeldung (Tx_MSG). Vor jeder Aussendung einer Meldung wird geprüft, ob das Funkmedium frei ist. Dennoch auftretende Kollisionen werden durch das Ausbleiben einer Quittungsmeldung (QD_ACK, ACK_Tx) erkannt. Mittels Aussendung weiterer Meldungen in einem festen Raster (AP_BC, t_{CYCL}) oder zu einem durch einen Zufallsgenerator bestimmten Zeitraster (t_{ACG}, n₁₁, n₁₂) wird die Kommunikation wieder aufgenommen. Dadurch ist eine lückenlose Erfassung der tragbaren Empfänger auch bei Überlappungen der Erfassungsbereiche gewährleistet. Der Ein/Ausschaltzyklus kann adaptiv angepasst werden.

## Beschreibung

Die vorliegende Erfindung betrifft ein Verfahren nach dem Oberbegriff des Patentanspruchs 1.

Aus EP 0 642 096 A2 ist eine Anordnung bekannt, welche das gleichzeitige Abfragen einer Mehrzahl von tragbaren Empfängern erlaubt. Diese tragbaren Empfänger sind meist als sogenannte Smartcards ausgebildet und können für elektronische Erfassungssysteme eingesetzt werden. Solche Erfassungssysteme werden beispielsweise verwendet für die Registrierung von Personen oder Gegenständen. Im folgenden werden solche tragbaren Empfänger bzw. Smartcards als elektronische Billette oder kurz als Billette bezeichnet.

Solche Billette kommunizieren bidirektional mit einer ortsfesten oder einer auf einem Fahrzeug befindlichen Sende/Empfangseinheit, diese Einheit wird in der nun folgenden Beschreibungseinleitung kurz mit "Terminal" bezeichnet. Die Kommunikation basiert im wesentlichen auf folgenden zwei Schritten:
Ein Terminal sendet mindestens eine generelle Meldung - auch Aufruf- oder Broadcastmeldung genannt - aus, mit der den in der Erfassungszone befindlichen Billetten mitgeteilt wird, dass sie zur Registrierung eine Präsenzmeldung mit Angabe der Identität absetzen können. Daraufhin kann das Terminal die Billette nach Bedarf einzeln adressieren und beispielsweise die empfangene Identität quittieren. Diese zwei Schritte müssen zur Gewährleistung einer lückenlosen Registrierung von Billetten wiederholt werden um eine schlüssige Abrechnung sicherzustellen.

Bedingt durch die Vielzahl von Personen auf einem Bahnsteig oder in einem Fahrzeug und allfälligen Überlappungen durch Terminals von anderen in der Nähe befindlichen Fahrzeugen ergeben sich Kollisionen in der Kommunikation. Dadurch ist eine sichere und lückenlose Erfassung der Billette gefährdet. Kollisionen in der Kommunikation ereignen sich insbesondere auch bei Parallelfahrten von Fahrzeugen. Solche Kollisionen können beispielsweise durch ein Verfahren vermieden werden, bei dem die Terminals und die Billette die Meldungen zu einem Zeitpunkt absetzen, der durch einen Zufallsgenerator festgelegt wird. Ein solches Verfahren setzt voraus, dass die Billette in einer dauernden Empfangsbereitschaft sind.

Das in EP 0 642 096 A2 erwähnte Verfahren "slotted ALOHA" beruht darauf, dass die Billette zu einem von mehreren vorbestimmten Zeitpunkten eine Meldung empfangen und bestätigen können. Die Auswahl eines Zeitpunktes erfolgt durch das Billett. Auch dieses Verfahren setzt voraus, dass die Billette stets empfangsbereit sind.

In einem in WO 99/36877 erwähnten Verfahren reduziert jedes Billett die Wahrscheinlichkeit zur Aussendung von weiteren Präsenzmeldungen soweit, bis keine Kollision mehr feststellbar ist und die Identität erfolgreich abgesetzt konnte. Die anderen Billette erhöhen im Anschluss daran die Sendewahrscheinlichkeit wieder soweit, bis entweder ebenfalls die Identität erfolgreich übermittelt werden konnte oder sich erneut eine Kollision ereignet. Solche und ähnliche Verfahren sind unter dem Begriff "Random Access" bekannt.

In WO 99/36877 wird ein Antikollisionsverfahren beansprucht, in dem das vorstehend erwähnte "Wahrscheinlichkeitsverfahren" mit dem "slotted ALOHA"-Verfahren kombiniert ist. Dieses Antikollisionsverfahren beinhaltet die Schritte:
a) ein Terminal sendet eine generelle Aufrufmeldung aus;
b) die in der Erfassungszone befindlichen Billette antworten mit einer Wahrscheinlichkeit kleiner 1 mittels einer Präsenzmeldung, die die Identität der betreffenden Billettes enthält;
c) empfängt das Terminal von einem Billett kollisionsfrei eine Präsenzmeldung, wird vom Terminal eine Kommunikation mit dem betreffenden Billett aufgebaut und anschliessend zum Verfahrensschritt a) zurückgekehrt;
d) empfängt das Terminal von einem Billet eine kollisionsbehaftete Präsenzmeldung wird zum Verfahrensschritt a) zurückgekehrt;
Im Verfahrensschritt b) wird die Wahrscheinlichkeit in Abhängigkeit von durch das Billett bereits beantworteten Aufrufmeldungen verändert.

Dieses Verfahren ist speziell geeignet für sogenannte Proximity-Karten; es setzt während des ganzen Ablaufes eine dauernde Kopplung voraus, da die Speisung solcher Karten in der Regel durch ein H-Feld im sogenannten Nahfeldbereich erfolgt. Dadurch ist auch die Grösse der Erfassungszone begrenzt.

Aus EP 0 902 353 ist eine Anordnung bekannt, die erlaubt, ein elektronisches Billett aus einem energiesparenden Schlafmodus in einen Aktivzustand zu versetzen. Dadurch resultiert ein geringerer Energieverbrauch und ermöglicht somit eine höhere Autonomie.

Eine hohe Autonomie von mit einer Energiequelle versehenen Billetten wird zusätzlich durch einen intermittierenden Betrieb des auf dem Billett befindlichen Sende-/Empfangsmodul erreicht. Das Sende-/Empfangsmodul ist nur in bestimmten Zeitabschnitten zum Empfang einer Meldung eingeschaltet, beispielsweise im Zyklus t_{CYCL} = 10 s für t_{PSG} = 10 ms. Dies ergibt einen sogenannten Duty Cycle von ¹/₁₀₀₀ und bewirkt einen dementsprechend geringeren Energieverbrauch.

Der intermittierende Betrieb hat zur Folge, dass die Aufrufmeldungen an alle Tickets nicht mehr zu einem beliebigen Zeitpunkt erfolgen können, sondern nur noch dann, wenn die auf den Billetten befindlichen Sende-/Empfangsmodule empfangsbereit sind. Dadurch ist die Gefahr von Kollisionen in der Kommunikation wesentlich erhöht. Dies wirkt sich nachteilig auf die innerhalb vorgegebener Zeiten lückenlos zu registrierenden Billette aus. Darüber hinaus können sich zusätzlich noch Kollisionen mit einer benachbarten Sende/Empfangseinheit ereignen, z.B. bei Parallelfahrt zweier Züge.

Der vorliegenden Erfindung liegt daher die Aufgabe zugrunde ein Verfahren anzugeben, das für eine intermittierende Kommunikation zwischen einem Terminal und einer Mehrzahl von tragbaren Empfängern auftretende Kollisionen erkennt und diesen Kollisionen so ausweicht, dass dadurch ein hoher Kommunikationsdurchsatz ermöglicht wird.

Diese Aufgabe wird durch die im Patentanspruch 1 angegebenen Massnahmen gelöst. Vorteilhafte Ausgestaltungen der Erfindung sind in weiteren Ansprüchen angegeben.

So können sich die folgenden Vorteile zusätzlich ergeben:
i) Durch wenigstens einen wagenspezifischen Ein-/Ausschaltzyklus können Billette in einem intermittierenden Betrieb auch dann erfasst werden, wenn sich die zugehörigen Erfassungszonen überlappen (vgl. Patentanspruch 4).
ii) Wiederholte Kollisionen in der Kommunikation werden dadurch vermieden, als die Billette je einen individuellen Zufallsgenerator für den Zeitpunkt der Aussendung einer Meldung aufweisen und der Zufallswert aus einem Wertebereich generiert wird, dessen Obergrenze monoton steigend ist (vgl. Patentanspruch 3).
iii) Wiederholte Kollisionen zwischen benachbarten Sende/Empfangseinheiten werden durch einen phasenverschobenen oder einen zweiten Ein-/Ausschaltzyklus vermieden (vgl. Patentanspruch 5).
iv) Der Ein-/Ausschaltzyklus der Billette ist durch eine von der Sende-/Empfangseinheit an die in der zugehörigen Erfassungszone befindlichen Billette ausgesandte Informationseinheit veränderbar und kann adaptiv an die jeweilige Anwendung ausgerichtet werden (vgl. Patentanspruch 7).
v) Auf den elektronischen Billetten brauchen keine hochpräzisen Taktgeber eingesetzt werden, da durch eine ausgesandte Informationseinheit eine Resynchronisation des Taktgebers im vorgegebenen Zyklus vorgenommen werden kann (vgl. Patentanspruch 8).

Die Erfindung wird nachfolgend anhand der Zeichnung beispielsweise näher erläutert. Dabei zeigen:
- Figur 1: den Grundriss eines Fahrzeuges mit der Anordnung einer ersten Sendeeinheit, einer zweiten Sende-/Empfangseinheit und einer Antwortstation sowie einer Eintritts- und Erfassungszone;
- Figur 2: einen ersten Ein-/Ausschaltzyklus für den intermittierenden Betrieb des zweiten Empfangsmoduls auf einem elektronischen Billett sowie einen phasenverschobenen alternativen Ein-/Ausschaltzyklus;
- Figur 3: einen zweiten alternativen Ein-/Ausschaltzyklus für den intermittierenden Betrieb des zweiten Empfangsmoduls auf einem elektronischen Billett;
- Figur 4: eine Signal-Detektion vor dem Aussenden einer Meldung und
- Figur 5: den Ablauf des erfindungsgemässen Verfahrens mit einer Sende-/Empfangseinheit und der Darstellung einer Kollision in der Kommunikation.

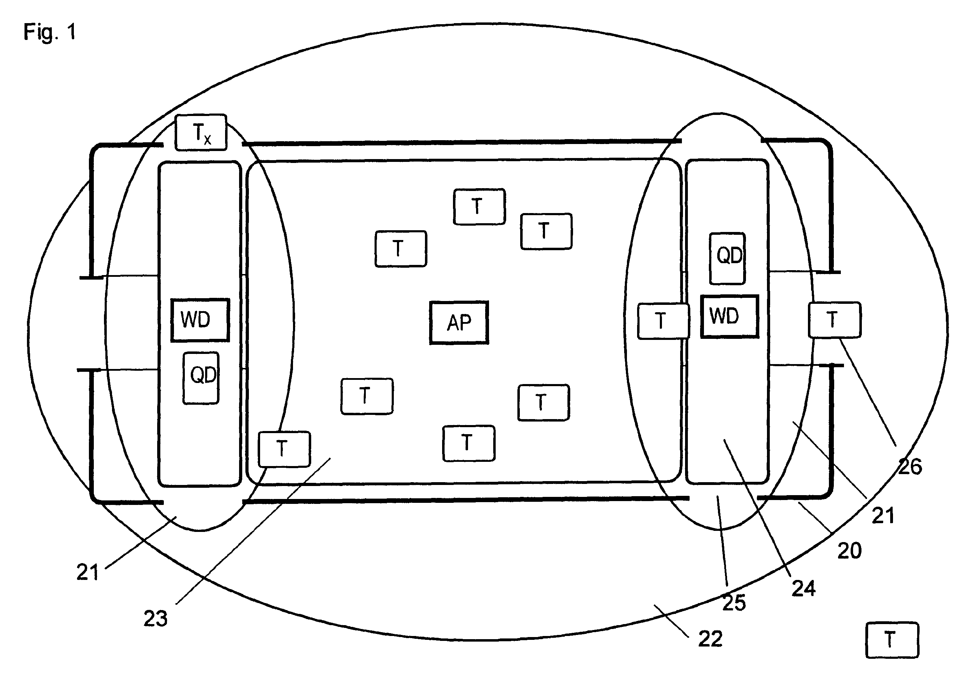

Figur 1 zeigt den Grundriss eines Eisenbahnwagens 20 mit je einem Einstiegsbereich 25 am Wagenende sowie einem Durchgangsbereich 26. Diese beiden Bereiche 25 und 26 ermöglichen den Zugang durch eine Plattform 24 zum Passagierraum 23. Türen sind der Übersichtlichkeit halber nicht eingezeichnet. Die Plattform 24 und der Passagierraum 23 können offen oder mit einer Wand und einer zugehörigen Türe ausgestaltet sein. Den beiden Plattformen 24 ist je eine erste Sendeeinheit WD zugeordnet, die die betreffende Eintrittszone 21 mit einem elektromagnetischen Feld abdeckt, das als sogenanntes Nahfeld ausgebildet ist, vorzugsweise ist eine Frequenz von 6.75 MHz oder von 13.5 MHz vorgesehen. Eine zweite Sende-/Empfangseinheit AP ist dem Passagierraum 23 zugeordnet, die eine Erfassungszone 22 ebenfalls mit einem elektromagnetischen Feld abdeckt, die Kommunikation erfolgt vorzugsweise im Frequenzbereich von 868 MHz oder von 433 MHz. Die eingezeichneten Zonen entsprechen ungefähr der Abdeckung hinsichtlich einer minimalen Feldstärke der betreffenden Sendeeinheiten WD und AP.

Es wird angenommen, dass sich ein Billett T_{X} in einem energiesparenden "Schlafzustand" befindet, d.h. es ist nur dessen erstes Empfangsmodul empfangsbereit. Nähert sich nun eine Person mit einem solchen Billett Tₓ dem Einstiegsbereich 25 eines Eisenbahnwagens 20, gelangt diese Person in die sogenannte Eintrittszone 21 und damit in den Nahfeldbereich der Sendeeinheit WD. Auf dem Billett Tₓ ist ein erstes Empfangsmodul vorhanden, das von der Sendeeinheit WD eine Informationseinheit INF1 empfängt, die einen Zeitbezug und ein Zeitraster t_{PSG} und t_{cYCL} enthält. Der Zeitbezug ist vorzugsweise durch eine 24 Bit - Zahl sowie einen Phasenwert bis zum nächsten bzw. ersten ganzen Zeitraster definiert.

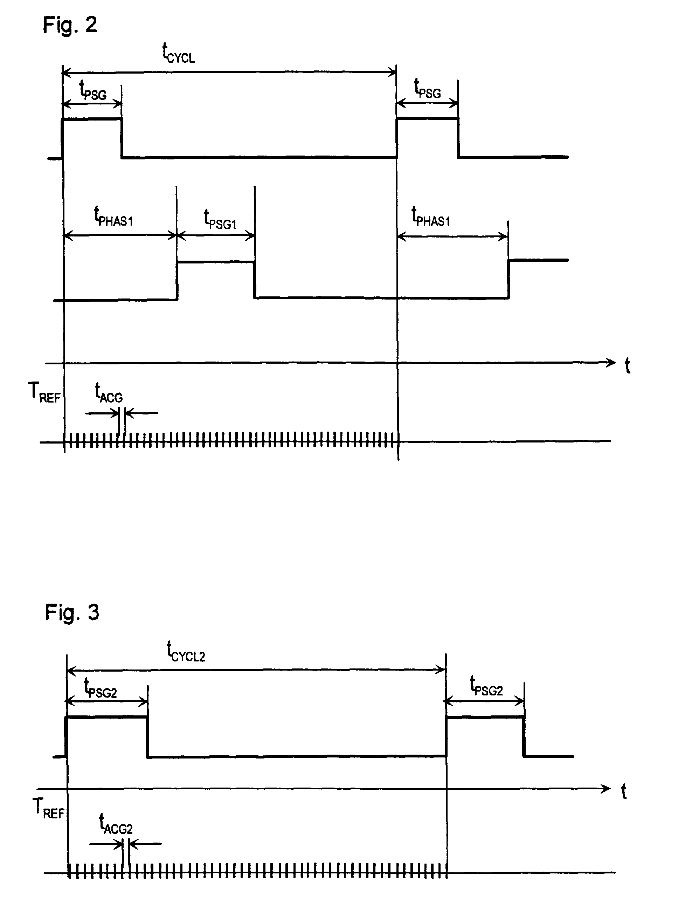

Durch den Empfang der Informationseinheit INF1 wird das Billett Tₓ "geweckt", d.h. es wird ein intermittierendes Einschalten eines auf dem Billett befindlichen zweiten Sende/Empfangsmoduls bewirkt. Der damit verbundene Zyklus ist in Fig. 2 dargestellt, der Zeitbezug ist durch die Ordinate beim Punkt T_{REF} gegeben. Dieser Vorgang des Weckens und intermittierenden Einschaltens spielt sich bei allen in die Eintrittszone 21 gelangenden oder befindlichen Billetten ab. Die Festlegung von Zeitbezug und Zeitraster t_{cYCL}, t_{PSG} auf den Billetten T kann auch auf andere als die vorstehend beschriebene Weise erfolgen; möglich ist auch ein fester Zeitbezug und/oder ein festes Zeitraster. Vorzugsweise ist der Zeitbezug abhängig von einem die Identität der betreffenden Erfassungszone zugeordneten Parameter. Dieser Parameter kann auch durch die zweite Sende-/Empfangseinheit bestimmt sein, dies ist insbesondere dann vorteilhaft, wenn einem Wagen mehr als eine zweite Sende-/Empfangseinheit zugeordnet ist. Die Festlegung des vorerwähnten Parameters kann mit einer generellen Aufrufmeldung von der jeweiligen zweiten Sende-/Empfangseinheit erfolgen, Einzelheiten sind weiter unten in der Beschreibung angegeben. Ein Beispiel einer möglichen Struktur der Informationseinheit INF1 ist der nachfolgenden Tabelle 1 zu entnehmen, wobei weitere Parameter mit PARAM1, PARAM2 angegeben sind:

**Tabelle 1**

| **Informationsfeld** | **Bedeutung** |
|---|---|
| COMMAND1 | Befehl an das Billett T |
| CYCL | Zyklusdauer |
| PSG | Dauer der Empfangsbereitschaft |
| REFCOUNT | Stand des Zeitzählers |
| REFPHASE | Einheiten des Zeitzählers bis T_{REF} |
| BROADCAST_LENGTH | Länge einer Aufrufmeldung |
| PARAM1 | Anwendungsparameter 1 |
| PARAM2 | Anwendungsparameter 2 |

Der zweiten Sende-/Empfangseinheit AP ist innerhalb der Erfassungszone 22 wenigstens ein Quittierungsgerät QD zugeordnet. Das Quittierungsgerät QD ist vorzugsweise wie ein Billett T ausgestaltet, es wird jedoch permanent durch die Infrastruktur des Eisenbahnwagens mit Energie versorgt.

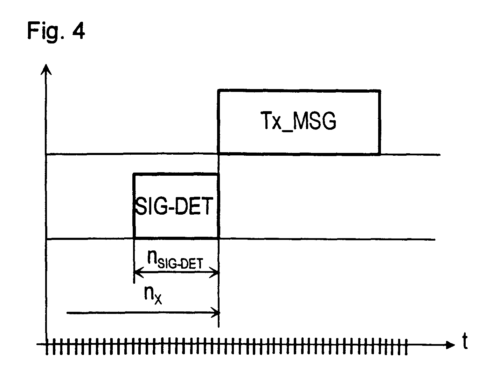

Die zweite Sende-/Empfangseinheit AP ist mit einer Schaltung versehen, die erlaubt, vor dem Aussenden einer Nachricht die Signalstärke zu messen, um festzustellen, ob das Funkmedium besetzt ist oder nicht; dies wird auch als RSSI (Received Signal Strength Indication), als CS (Carrier Sense) oder als Signal-Detektion SIG-DET bezeichnet. Der gleiche Ablauf der Signal-Detektion SIG-DET wird auch auf Seite der Billette T durchgeführt und ist in Fig. 4 mit Tx_MSG für die zu sendende Präsenzmeldung und mit SIG-DET für die Signal-Detektion bezeichnet, x steht dabei für die Nummer bzw. einen Index eines Billettes, x=1, 2, .. .

Eine Ausgestaltungsform des erfindungsgemässen Verfahrens wird nun mittels der Anordnung gemäss Fig. 1 anhand der in den Figuren 2 und 4 dargestellten Abläufe in weiteren Einzelheiten erläutert. Es bezeichnen:
- AP: Zweite Sende-/Empfangseinheit AP (Access Point);
- T1, T2, T3: drei verschiedene Billette T in der Erfassungszone 22 der betreffenden zweiten Sende-/Empfangseinheit AP;
- QD: der zweiten Sende-/Empfangseinheit AP zugeordnetes Quittierungsgerät QD (Quittance Device) ;
- t_{ACG}: Antikollisionsraster (Anti Collision Grid);
- t_{cYCL}: Zykluszeit für intermittierenden Betrieb;
- t_{LAT}: Latenzzeit zu einer ausstehenden Empfangsbestätigungsmeldung ACK_Tx;
- t_{PHAS1}: Zeitliche Phasenverschiebung für einen alternativen Ein-/Ausschaltzyklus mit denselben Parametern t_{CYCL} und t_{PSG} ;
- t_{PSG}: Einschaltdauer innerhalb der Zykluszeit t_{cYCL};
- T_{REF}: Zeitreferenz für alle in der Erfassungszone 22 befindlichen Teilnehmer (Tₓ, AP, QD);
- AP_BC: Aufrufmeldung (Broadcast);
- QD_ACK: Quittungsmeldung des Gerätes QD an die zweite Sende-/Empfangseinheit AP;
- ACK_T1, ACK_T2, ACK_T3: Empfangsbestätigungsmeldung an das betreffende Billett T1, T2 bzw. T3;
- T1_MSG, T2_MSG, T3_MSG: Präsenzmeldung der Billette T1, T2 bzw. T3.

In einer nicht proportionalen Darstellung ist in Fig. 2 der Ein-/Ausschaltzyklus für das zweite Empfangsmodul auf einem Billett T zu entnehmen. Die angegebenen Zeiten richten sich nach der Anwendung; als Beispiele sind folgende Werte aufgeführt:
t_{cYCL} = 360 s und t_{PSG} = 60 ms für die Erfassung in einem Intercity-Zug entsprechend einem Duty-Cycle von ¹/₆₀ 0 0 ;
t_{cYCL} = 30 s und t_{PSG}= 30 ms für die Erfassung in einem Autobus entsprechend einem Duty-Cycle von ¹/₁₀₀₀.
Empfängt ein Billett T während einer bestimmten Zahl - z.B. 5 - aufeinanderfolgender Zyklen t_{cYCL} keine Aufrufmeldung AP_BC, kehrt das Billett in den vorgenannten Schlafmodus zurück. In Figur 2 ist ebenfalls das Antikollisionsraster mit einer Breite von t_{ACG} dargestellt. t_{cYCL} und t_{ACG} sind vorzugsweise über ein ganzzahliges Vielfaches gemäss nachfolgenden Beispielen miteinander verknüpft:
t_{cYCL} = n * t_{ACG}, n = 1000 .. 60000; gemäss dem zweiten vorgenannten Beispiel t_{cYCL} = 30 s ergibt sich für n = 6000:
t_{ACG} = 5 ms. Es ist auch möglich, die Grösse t_{ACG} aus t_{PSG} zu parametrisieren bzw. zu bestimmen. Je nach Anwendung kann es auch zweckdienlich sein, für n einen Wert zu benutzen, der ausserhalb des vorgenannten Beispielintervalls 1000 .. 60000 liegt.
Für eine angenommene Funkübertragungskapazität von 80 kbit/s ergibt sich für 3 Einheiten des Antikollisionsraster von t_{ACG} = 5 ms eine Informationsmenge von:
80 kbit/s · 5 ms = 400 Bit für eine Einheit; für 3 Einheiten ergeben sich 3 · 400 Bit = 150 Byte, wobei 8 Bit = 1 Byte. Eine Uebertragung von 150 Byte brutto benötigt somit 15 ms; die Nettoübertragungsrate ist geringer, da noch ein Anteil für eine Sicherungsschicht benötigt wird.

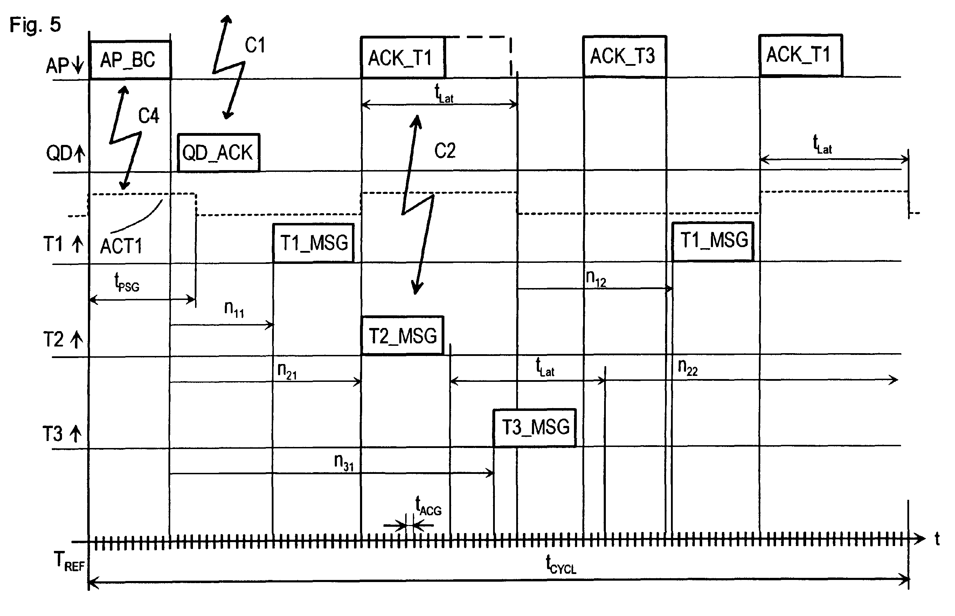

In Figur 5 ist mit T_{REF} der den Billetten T und der zweiten Sende-/Empfangseinheit AP bekannte Referenzzeitpunkt dargestellt. Innerhalb der Dauer t_{PSG} gemäss Fig. 2 sendet die zweite Sende-/Empfangseinheit AP eine Aufrufmeldung AP_BC. Eine mögliche Struktur der Aufrufmeldung AP_BC kann der nachstehend aufgeführten Tabelle 2 entnommen werden:

**Tabelle 2**

| **Informationsfeld** | **Bedeutung** |
|---|---|
| COMMAND | Befehl an das Billett T |
| REFCOUNT | Stand des Zeitzählers |
| REFPHASE | Einheiten des Zeitzählers bis T_{REF} |
| POSITION | Ort |
| COURSE | Kursnummer |
| TYPE | Art des Verkehrsmittels |
| PARAM1 | Anwendungsparameter 1 |
| PARAM2 | Anwendungsparameter 2 |

Im Feld COMMAND kann die Information enthalten sein, dass das diese Meldung empfangende Billett eine sogenannte Präsenzmeldung Tx_MSG zurücksenden muss; ist keine Präsenzmeldung zurückzusenden, kann die Aufrufmeldung für das betreffende Billett die Funktion eines sogenannten Wachhalterufs haben. Die Felder REFCOUNT und REFPHASE können bei dieser Meldung dazu benutzt werden, den Zeitbezug auf dem Billett zu resynchronisieren. Dies kann erforderlich sein, da auf den Billetten T in der Regel keine hochpräzisen Taktgeber verfügbar sind. Eine Drift des Ein-/Ausschaltzyklus wird dadurch verhindert. Der Wachhalteruf kann in einer Periodizität m ^{.} t_{CYCL} erfolgen; wobei für m folgende Werte zugelassen sind: m = 1, 2, .. , (Nₘₐₓ - 1) ; Nₘₐₓ steht für die maximale Anzahl Zyklen, nach denen ein Billett T bei erfolgloser Kommunikation mit einer Sendeeinheit WD oder AP wieder in den Schlafzustand zurückkehrt.

Ein der zweiten Sende-/Empfangseinheit AP zugeordnetes Quittierungsgerät QD - siehe dazu Fig. 1 - bestätigt im kollisionsfreien Fall den Empfang der Aufrufmeldung AP_BC mit einer Quittungsmeldung QD_ACK an die zweite Sende-/Empfangseinheit AP. Die für die Uebermittlung benötigte Zeit beträgt eine den Billetten T bekannte Zahl von Einheiten der Länge t_{ACG}, diese Zahl ist beispielsweise als Festwert oder in einem weiteren Feld der ersten Informationseinheit INF1 definiert. In der Quittungsmeldung QD_ACK ist vorteilhafterweise die Identität der zweiten-/Empfangseinheit AP enthalten, damit in dieser schlüssig entschieden werden kann, ob die ausgesandte Aufrufmeldung AP_BC vom Quittungsgerät QD empfangen wurde. Zusätzlich oder alternativ ist es auch möglich, dass das Quittierungsgerät QD nur solche Aufrufmeldung AP_BC quittiert, die mit der dem Quittierungsgerät QD bekannten Identität der zweiten Sende-/Empfangseinheit AP übereinstimmen.

In Figur 5 wird zunächst angenommen, dass alle drei Billette T1, T2 und T3 die Aufrufmeldung AP_BC empfangen haben. Auf den Billetten Tₓ mit x = 1, 2 oder 3 ist ein Zufallsgenerator vorgesehen, der Zufallszahlen nₓ₁, nₓ₂, nₓ₃ im bis maximal n = 1000 .. 60000 erzeugt. Im folgenden sind Zeitangaben und Zufallszahlen nₓᵢ wie folgt mit einander verknüpft: tₓᵢ = nₓᵢ · t_{ACG} .
Die Zufallszahlen nₓᵢ sind grösser als der der Zeit t_{LAT} entsprechende Anzahl Einheiten t_{ACG} und deutlich kleiner als die der Zeit t_{CYCL} entsprechende Anzahl Einheiten t_{ACG}. Der Algorithmus zur Erzeugung von Zufallszahlen auf einem Billett Tₓ ist vorzugsweise von folgender Art:
nₓᵢ := zₓ · Nₓᵢ + bₓ , wobei nₓᵢ als ganzzahliger Wert dargestellt ist.
zₓ ist eine Zufallszahl aus dem Intervall ]0, 1[ , z.B. in einer diskreten 16-Bit-Darstellung. Der Index x bedeutet, dass die Zufallszahl billettindividuell, also abhängig vom Billett Tₓ erzeugt wird. Beispielsweise kann der Startwert des Zufallszahlengenerators abhängig von einem von der Billettidentität zugeordneten Parameter festgelegt sein.
Nₓᵢ ist eine ganzzahlige Obergrenze des Zahlenbereiches für die zu generierenden Zufallszahlen, die Folge Nₓ₁ , Nₓ₂ , Nₓ₃ , .., ist solange bis zum vorstehend erwähnten Wert n streng monoton oder monoton steigend, bis das Billett Tₓ eine Bestätigungsmeldung ACK_Tx erhalten hat; diese Monotonie wird als sogenannter "exponential back off" bezeichnet. Dadurch wird die Wahrscheinlichkeit weiterer Kollisionen reduziert.
bₓ ist eine positive ganzzahlige Konstante, um einen minimale Grösse der Zahlen nₓᵢ sicherzustellen. Entgegen der Darstellung in Fig. 5 ab den Meldung T1_MSG, T2_MSG und T3_MSG ist es auch möglich, dass bₓ so für die weiteren Versuche gewählt ist, dass damit auch die Latenzzeit t_{LAT} mit berücksichtigt ist, das heisst, dass die Zahl nₓᵢ für i > 1 die Anzahl Einheiten t_{ACG} des Antikollisionsalgorithmus ab dem Zeitpunkt des Aussendens einer Präsenzmeldung Tx_MSG beinhaltet. Dieser letzte Fall ist in der Fig. 6 am Ende der Meldung AP_BC dargestellt.

Da der jeweilige Startwert des Zufallsgenerators durch einen billettspezifische Parameter definiert ist, ist es unabhängig von der in einer Erfassungszone 22 befindlichen Anzahl Billette unmöglich, dass auf zwei Billetten eine identische Zahlenfolge generiert wird. Trotzdem sind Kollisionen möglich, diese Fälle werden nachstehend im Einzelnen dargelegt.

Mit den so definierten Zufallszahlen n₁₁, n₂₁ und n₃₁ ist vorgesehen, dass die Billette nach n₁₁, n₂₁ und n₃₁ Einheiten des Antikollisionsrasters t_{ACG} eine Präsenzmeldung T1_MSG, T2_MSG und T3_MSG absetzen. Ob tatsächlich eine Präsenzmeldung Tx_MSG auch ausgesendet wird, bestimmt sich durch die Signal-Detektion SIG-DET gemäss der Figur 4. Die Präsenzmeldung Tx_MSG wird nur dann ausgesandt, wenn während einer festgelegten Anzahl Einheiten n_{SIG-DET} das Funkmedium frei ist. Da jedes Billett Tₓ unmittelbar nach Absetzen einer Präsenzmeldung Tx_MSG eine Empfangsbestätigungsmeldung ACK_Tx erwartet, wird das Sende-/Empfangsmodul zusätzlich zum intermitterenden Zyklus T_{CYCL} / T_{PSG} für die Dauer der Latenzzeit aktiv geschaltet. Dies ist in der Fig. 5 mit ACT1 und einer zugehörigen Rechteckfunktion dargestellt. Die Empfangsbestätigungsmeldung ACK_Tx enthält die Adresse des betreffenden Billettes Tₓ. Wenn zufällig ein anderes Billett Ty eine solche Empfangsbestätigungsmeldung ACK_Tx empfängt, wird diese Meldung verworfen. Möglich ist aber, da der erwartete Absender ebenfalls in dieser Empfangsbestätigungsmeldung ACK_Tx enthalten ist, ein Billett Ty einzelne Felder dieser Meldung für eine Resynchronisation des auf dem Billett Ty befindlichen Taktgebers benutzt.

Nachfolgend werden mögliche Kollisionen und ihre Behandlung dargestellt:
Kollisionsfall C1 gemäss Fig. 5:
   Die zweite-/Sendeempfangseinheit AP erhält vom Quittierungsgerät QD keine Quittungsmeldung QD_ACK und wiederholt für eine festgelegte Anzahl das Aussenden einer Aufrufmeldung AP_BC gemäss dem festgelegten Zyklus t_{CYCL} und t_{PSG}. Wiederholt sich die Kollision während einer bestimmten Anzahl Zyklen t_{CYCL}, ist in einer weiteren Ausgestaltung der Erfindung vorgesehen, dass die zweite Sende-/Empfangseinheit AP eine Aufrufmeldung AP_BC zu einem gegenüber T_{REF} um die Phase t_{PHAS1} verschobenen Zeitpunkt aussendet. Den Billette T ist dieses um die Phase t_{PHAS1} verschobene Raster z.B. durch den Inhalt der Informationseinheit INF1 oder INF2 bekannt.
Kollisionsfall C2 gemäss Fig. 5:
   Dieser Fall kann bei einer Parallelfahrt von zwei Bussen auftreten. Es lässt sich nicht verhindern, dass sich die durch die Ausbreitung der elektromagnetischen Felder definierten Erfassungszonen 22 überlappen. Die Überlappung als solche führt wegen des vorzugsweise wagenspezifisch festgelegten Ein-/Ausschaltzyklus noch nicht zwangsläufig zu einer Kollision. Bedingt durch die Übertragungsdauer von z.B. 15 ms sind jedoch beispielsweise folgende Kollisionen möglich:
   a) Mit der Signal-Detektion SIG-DET werden jene Fälle nicht erfasst, wo das sendende Billett Tₓ eine Meldung TX_MSG nahezu gleichzeitig absendet, wie z.B. die zweite Sende/Empfangseinheit AP eine Bestätigungsmeldung ACK_Ty absendet.
   b) Ebenfalls mit der Signal-Detektion SIG-DET können auch nahezu gleichzeitig gesandte Meldungen nicht erkannt werden, die von der betreffenden Erfassungszone 22 nicht zugeordneten Billetten T oder mit anderen zweiten Sende/Empfangseinheiten AP kollidieren. Dabei ist zu berücksichtigen, dass erstens die Sendeleistung der Billette Tₓ geringer ist und zweitens wegen der räumlichen Distanz und der damit verbundenen Dämpfung durch Wände ebenfalls wesentlich geringere Pegel auftreten. Dadurch ist die Wahrscheinlichkeit einer Kollision eines wagenfremden Billettes T mit der wageneigenen zweiten Sende-/Empfangseinheit AP erheblich reduziert, aber nicht ausgeschlossen.
   Im vorliegenden Kollisionsfall C2 gemäss der Fig. 5 erhält weder das Billett T2 noch das Billett T1 auf die ausgesandten Präsenzmeldungen T2_MSG und T1_MSG eine Empfangsbestätigungsmeldung ACK_T2 bzw. ACK_T1. Nach einer Latenzzeit t_{LAT} sendet jedes Billett nach n₂₂ bzw. n₁₂ Einheiten des Antikollisionsrasters t_{ACG} erneut eine Präsenzmeldung T2_MSG bzw. T1_MSG aus.
Kollisionsfall C3 (in den Figuren nicht dargestellt) :
   Dieser Fall kann beim Kreuzen zweier Fahrzeuge mit hoher gegenseitiger Relativgeschwindigkeit von ca. 300 km/h und mehr auftreten; die relative Geschwindigkeit der Züge ergibt sich als Differenz der absoluten Geschwindigkeit, deren Vorzeichen die Fahrtrichtung der Züge beinhaltet. Dieser Kollisionsfall ist gegenüber dem Kollisionsfall C1 entweder nicht verschieden oder kann zu einer unvollständigen Übertragung führen. Eine unvollständige Uebertragung wird über eine Transportsicherung, beispielsweise mittels einer Checksumme, erkannt und kann erfindungsgemäss mit einer Wiederholung der Aussendung einer Meldung (vom oder zum Billett) behoben werden.
Kollisionsfall C4 gemäss Fig. 5:
   Dieser Fall kann dann auftreten, wenn eine weitere zweite Sende-/Empfangseinheit eines benachbarten Wagens vorhanden ist und so nahe zum Zeitpunkt T_{REF} eine Aufrufmeldung absetzt, die mittels der Signal-Detektion SIG-DET nicht mehr erkennbar ist. Bedingt durch je wagenindividuell festgelegte Ein-/Ausschaltzyklen eliminiert sich diese Kollision entweder durch erneute Aussendung zu einem späteren, durch ein Vielfaches von t_{CYCL} festgelegten Zeitpunkt oder durch einen Wechsel auf einen um die Phase T_{PHAS1} verschobenen Ein/Ausschaltzyklus. Es ist speziell in diesem Fall auch eine Dauerstörung möglich, beispielsweise verursacht durch ein Trägersignal auf der festgelegten ersten Frequenz. Einer solchen Kollision wird in einer weiteren Ausgestaltung der Erfindung dadurch begegnet, dass sowohl auf dem Billett T als auch auf der Seite der zweiten Sende-/Empfangseinheit AP auf eine zweite Frequenz ausgewichen wird. Ein-/Ausschaltzyklen und allenfalls die Festlegung einer zweiten Frequenz können in der Informationseinheit INF1 in den weiteren Feldern PARAM1, PARAM2, .. enthalten sein. Damit sind die Billette T in der Lage, zum vorneherein oder erst nach einer festgelegten Anzahl Zyklen t_{CYCL} auf die andere Frequenz zu wechseln. Ist die erste Frequenz auf 868 MHz, ist es vorteilhaft, die zweite Frequenz beispielsweise innerhalb von ± 500 kHz zu wählen.

In Figur 3 ist ein alternativer zweiter Ein-/Ausschaltzyklus dargestellt. Der Ein-/Ausschaltzyklus kann adaptiv ausgestaltet sein: Neben den Aufrufmeldungen AP_BC sendet die zweite Sende-/Empfangseinheit periodisch, z.B. jeden 7. Zyklus t_{CYCL} einen sogenannten Wachhalteruf. Die Struktur des Wachhalterufs ist ähnlich jener in der Aufrufmeldung und kann sich z.B. im Feld COMMAND unterscheiden, beispielsweise können im Feld COMMAND der Informationseinheit INF2 die symbolischen Werte "ANTWORT", "SYNCHRONISATION" "NEUER ZYKLUS" alternativ oder kumulativ aufgeführt sein. Mit dem Wachhalteruf (und der Aufrufmeldung) wird den Billetten T mitgeteilt, dass sie sich immer noch in einer Erfassungszone 22 befinden und auf den Billetten T wird ein Zähler auf einen Initialwert gestellt. Dieser Zähler wird mit dem Ablauf einer jeden Zeitdauer t_{CYCL} um 1 reduziert; erreicht dieser Zähler den Wert Null, wird das betreffende Billett T in den Schlafzustand versetzt. Es ist auch möglich, diesen Zähler bei Empfang einer Wachhalterufes oder einer Aufrufmeldung auf Null zu setzen und jeweils um den Wert 1 bis zu einem Endwert hochzuzählen.

In der konkreten Ausgestaltung eines Wagens können die erste Sendeeinheit WD und die zweite Sende-/Empfangseinheit AP in einer als Terminal bezeichneten Einheit vereinigt sein; möglich ist auch, das Quittierungsgerät QD in einem Minimalabstand ebenfalls in ein solches Terminal einzubauen.

Alternativ können wie in Fig. 1 dargestellt, einer zweiten Sende-/Empfangseinheit AP zwei Quittierungsgeräte QD zugeordnet sein. In einer weiteren Ausführungsform der Erfindung ist vorgesehen, dass die zweite Sende-/Empfangseinheit AP zunächst zwei Quittierungsmeldungen QD_ACK erwartet. Trifft nur eine oder gar keine Quittierungsmeldung QD ein, wird erneut eine Aufrufmeldung AP_BC im nächsten Zyklus ausgesandt; dieser Vorgang kann sich z.B. für 2..4 Zyklen wiederholen, wobei 4 < Nₘₐₓ., wobei Nₘₐₓ für die maximale Anzahl Zyklen steht, nach denen ein Billett 10 ohne Empfang einer Aufrufmeldung AP_BC wieder in den Schlafzustand fällt. Bei den weiteren Zyklen 5, 6, .. kann vorgesehen sein, dass das Eintreffen einer Quittungsmeldung QD_ACK insoweit genügt, als dadurch keine weiteren Aufrufmeldungen abgesandt werde.

Dieser Fall kann auftretenden, falls eine partielle Überlappung mit der Erfassungszone eines anderen Wagens auftritt.

Die Anwendung des erfindungsgemässen Verfahrens ist nicht auf öffentliche Verkehrsmittel beschränkt. Dieses Verfahren kann auch zur Verfolgung und Ortung von Objekten eingesetzt werden, die mit einer ein Sende-/Empfangsmodul aufweisenden SmartCard versehen sind. Denkbar ist auch eine Registrierung von Personen in Gebäuden, beispielsweise in bestimmten Zonen eines Museums oder in speziell gesicherten Bereichen eines Gebäudes.

Liste der in Figur 1 verwendeten Bezugszeichen:

| | |
|---|---|
| T, Tₓ | elektronisches Billett |
| 20 | Eisenbahnwagen |
| 21 | Eintrittszone |
| 22 | Erfassungszone |
| 23 | Passagierraum |
| 24 | Plattform |
| 25 | Einstiegsbereich |
| 26 | Durchgangsbereich |
| WD | Erste Sendeeinheit |
| AP | Zweite Sende-/Empfangseinheit |
| QD | Quittierungsgerät |

## Patentansprüche

1. Verfahren zum Kollisionsmanagement für ein drahtloses Erfassungssystem das enthält:
a) eine Mehrzahl von tragbaren Empfängern (T, Tₓ, T1, T2), welche ein Sende-/Empfangsmodul aufweisen;
b) wenigstens eine ortsfest oder auf einem Fahrzeug angebrachte Sende-/Empfangseinheit (AP) für eine intermittierende Kommunikation mittels eines Ein-/Ausschaltzyklus (t_{CYCL}, t_{PSG}) innerhalb eines Zyklus (t_{CYCL}) mit den in einer Erfassungszone (22) befindlichen tragbaren Empfängern (Tₓ) ;
**gekennzeichnet durch** folgende Verfahrensschritte:
A auf eine von der Sende-/Empfangseinheit (AP) an die tragbaren Empfänger (Tₓ) ausgesandte Aufrufmeldung (AP_BC) wird **durch** ein der Erfassungszone zugeordnetes Quittierungsgerät (QD) eine Quittungsmeldung (QD_ACK) an die Sende-/Empfangseinheit (AP) übermittelt,
B auf den Empfang der Aufrufmeldung (AP_BC) senden die tragbaren Empfänger (Tₓ) nach einer **durch** einen Zufallsgenerator festgelegten Zeit (n11, n22) eine den betreffenden Empfänger (Tₓ) identifizierende Präsenzmeldung (Tx_MSG) an die Sende-/Empfangseinheit (AP);
C die Sende-/Empfangseinheit (AP) quittiert eine empfangene Präsenzmeldung (Tx_MSG) mit einer an den betreffenden Empfänger (Tₓ) adressierten Empfangsbestätigungsmeldung (ACK_Tx) ;
D auftretende Kollisionen in der Kommunikation werden mit zusätzlichen Verfahrensschritten behoben:
D1 im Verfahrensschritt A erfolgt nach dem Ausbleiben der Quittungsmeldung (QD_ACK) nach einem Zyklus (_{TCYCL}) eine Wiederholung der Aussendung der Aufrufmeldung (AP_BC) ;
D2 erhält ein tragbarer Empfänger (Tₓ) nach Aussendung einer Präsenzmeldung (Tx_MSG) innerhalb einer festgelegten Latenzzeit (t_{LAT}) keine Empfangsbestätigungsmeldung (ACK_Tx), wiederholt der tragbare Empfänger (Tₓ) nach einer **durch** einen Zufallsgenerator festgelegten Zeit (n11, n22) die Aussendung einer den betreffenden Empfänger (Tₓ) identifizierende Präsenzmeldung (Tx_MSG).

2. Verfahren nach Anspruch 1,
**dadurch gekennzeichnet, dass**
in einem oder mehreren der Verfahrensschritte A, B und C nur dann eine Meldung (AP_BC, Tx_MSG, ACK_Tx) ausgesandt wird, wenn unmittelbar vorher durch eine Signal-Detektion (SIG-DET) festgestellt wird, dass das Funkmedium frei ist.

3. Verfahren nach Anspruch 1 oder 2,
**dadurch gekennzeichnet, dass**
bei jeder Wiederholung des Verfahrensschrittes D2 die durch einen Zufallsgenerator festgelegte Zeit (n₁₁, n₁₂) aus einem Zahlenbereich mit monoton wachsender Obergrenze erzeugt wird.

4. Verfahren nach einem der Ansprüche 1 bis 3,
**dadurch gekennzeichnet, dass**
der Ein-/Ausschaltzyklus (t_{CYCL}, t_{PSG}) und der Zyklus (t_{CYCL}) individuell von der jeweiligen Sende-/Empfangseinheit (AP) festgelegt wird.

5. Verfahren nach einem der Ansprüche 1 bis 4,
**dadurch gekennzeichnet, dass**
der Zyklus (t_{CYCL}) in ein Antikollisionsraster (t_{ACG}) gegliedert ist, wobei ein Zyklus (t_{CYCL}) ein Vielfaches (n) des Antikollisionsraster (t_{ACG}) ist und dass Meldungen (AP_BC, QD_ACK, Tx_MSG, ACK_Tx) stets zu durch das Antikollisionsraster (t_{ACG}) vorgegebenen Zeitpunkten ausgesandt werden.

6. Verfahren nach einem der Ansprüche 1 bis 5,
**dadurch gekennzeichnet, dass**
ein zusätzlicher Ein-/Ausschaltzyklus (t_{PHAS1}, t_{PSG}) innerhalb des Zyklus (t_{CYCL}) geschaltet wird.

7. Verfahren nach einem der Ansprüche 1 bis 6,
**dadurch gekennzeichnet, dass**
der Ein-/Ausschaltzyklus (t_{CYCL}, t_{PSG}) durch eine von der Sende-/Empfangseinheit an die in der zugehörigen Erfassungszone befindlichen Empfänger T, Tₓ) ausgesandte Aufrufmeldung (AP_BC) verändert wird.

8. Verfahren nach einem der Ansprüche 1 bis 7,
**dadurch gekennzeichnet, dass**
mit einer von der Sende-/Empfangseinheit (AP) ausgesandten Aufrufmeldung (AP_BC) eine Resynchronisation eines auf dem Empfänger befindlichen Taktgebers vorgenommen wird.

9. Verfahren nach einem der Ansprüche 1 bis 8,
**dadurch gekennzeichnet, dass**
aufgrund einer erkannten Kollision die Kommunikation auf einem alternativen Zyklus (t_{CYCL2}, t_{PSG2}) aufgebaut wird.

10. Verfahren nach Anspruch 9,
**dadurch gekennzeichnet, dass**
der alternative Zyklus (t_{CYCL2}) in ein zweites Antikollisionsraster (t_{ACG2}) gegliedert ist, wobei ein Zyklus (t_{CYCL}) ein Vielfaches (n) des zweiten Antikollisionsraster (t_{ACG2}) ist und dass Meldungen (AP_BC, QD_ACK, Tx_MSG, ACK_Tx) stets zu durch das zweite Antikollisionsraster (t_{ACG2}) vorgegebenen Zeitpunkten ausgesandt werden.

11. Verfahren nach einem der Ansprüche 1 bis 10,
**dadurch gekennzeichnet, dass**
aufgrund einer erkannten Kollision die Kommunikation auf einer anderen Frequenz aufgebaut wird.

12. Verfahren nach einem der Ansprüche 1 bis 11,
**dadurch gekennzeichnet, dass**
die vom Zufallsgenerator erzeugten Zeiten (nₓ₁, nₓ₂) von der Identität des betreffenden Empfängers (Tₓ) abhängig sind.
